# EUROPEAN PATENT SPECIFICATION

(11) **EP 1 459 245 B1**
(45) Date of publication and mention of the grant of the patent: **08.03.2006**
(21) Application number: 02781563.8
(22) Date of filing: 20.11.2002
(51) Int. Cl.: G09B 21/00

(54) **DISPLAY SYSTEM WITH TACTILE GUIDANCE**
ANZEIGENSYSTEM MIT TAKTILER FÜHRUNG
ECRAN A GUIDAGE TACTILE

(30) Priority: 12.12.2001 EP 01204854
(43) Date of publication of application: 22.09.2004
(73) Proprietor: Koninklijke Philips Electronics N.V., 5621 BA Eindhoven (NL)
(72) Inventor: DIEDERIKS, Elmo, M., A., NL-5656 AA Eindhoven (NL)
(74) Representative: Uittenbogaard, Frank
(86) International application number: PCT/IB2002/004872
(87) International publication number: WO 2003/050754

(56) References cited:
- EP-A- 0 959 445
- US-A- 5 580 251
- US-B1- 6 278 441

## Description

### FIELD OF THE INVENTION

The invention relates to a display system comprising a display screen for displaying a graphical representation on a display screen, the display screen providing tactile and/or visual guidance to the user by means of relief.

The invention further relates to a data processing system comprising the above display system.

### BACKGROUND OF THE INVENTION

An example of such a display system is disclosed in US 6,072,475. The known system comprises a touch screen which extends in three physical dimensions. When a user slides his finger over the active surface area of the touch screen, the tactile feedback gives him information about the position of the finger. The use of the touch screen is facilitated especially when the user is on the move or when the touch screen is out of sight. A problem of the known system is that it can be applied to a very limited range of applications, all obeying to the same design rules as regards the screen layout. A graphical display e.g. an LCD, is aknowledged in the preamble of claim 1.

### OBJECT AND SUMMARY OF THE INVENTION

It is an object of the invention to provide an improved system of the type defined in the opening paragraph. The invention is not out in claim 1. To this end, the display system according to the invention comprises a relief generator for dynamically generating the relief on the display screen. It is thus achieved that the relief can be changed dynamically in accordance with the graphical output of the current application. For example, one application may require tactile guidance at the top of the screen, while another application may require tactile guidance at the bottom of the screen. Furthermore, within a single application the location where tactile guidance is desired may change during the execution. For example, if the application comprises multiple transaction screens, a first screen may require tactile guidance at the top of the screen while a second screen may require tactile guidance at the bottom of the screen. By providing a relief generator for dynamically generating relief on the display screen, a very flexible system for providing tactile guidance is obtained.

In an embodiment of the display system according to the invention the relief generator comprises piezo electrical material to provide said relief in response to electrical signals. Such materials are generally used to generate an electrical signal in response to a mechanical deformation. However, the reverse can also be achieved with these materials: a mechanical deformation results from supplying an electrical signal to it. Alternatively or additionally, other means for generating mechanical deformations may be used, e.g. electromechanical constructions, shape memory alloys, fluid reservoirs etc.

An embodiment of the display system according to the invention is further arranged to detect user actuations from electrical signals received from the relief generator. Generating relief on a display screen is particularly useful if the user can interact with the system by touching or pressing the screen. Various techniques for creating touch screens are well known and widely applied, for example in computers, personal digital assistants and cell phones. Generally, a graphical display, e.g. an LCD, is combined with a sensitive layer for sensing the position of a touch with a finger or a stylus. The relief generator of the present invention may very well be utilized as such a sensitive layer. As described above, means for providing a mechanical deformation in response to electrical signals often show the reverse behavior as well. For example, piezo electrical material generates an electrical signal in response to a mechanical deformation. It is thus achieved that a dedicated touch sensitive layer can be omitted.

In an embodiment of the display system according to the invention the relief generator is arranged to produce protrusions or depressions at selected locations of the display screen. Such protrusions or depressions are easily sensed when sliding a finger across the screen, giving the user information about which areas of the screen are currently relevant, e.g. sensitive to touch input.

In a preferred embodiment of the display system according to the invention the relief generator comprises individually addressable relief elements each of which is arranged to cause a displacement in a direction substantially perpendicular to the display screen. It is thus achieved that tactile guidance can be provided at specific locations and at specific moments. For example, a matrix of piezo electrical elements may be provided, capable of generating relief at any desired location of the screen. The elements may have various dimensions, but preferably they have the same size of a single graphical pixel or of a small group of graphical pixels.

In an embodiment of the display system according to the invention the relief generator comprises transparent material and is located at the front of the display screen. If the relief generator is substantially transparent, it can advantageously be mounted at the front of the display screen. The graphical representation remains visible through the transparent material, while the relief is well sensible by the user.

In an alternative embodiment of the display system according to the invention the relief generator is located at the rear of the display screen, the display screen being a flexible display capable of following the relief provided by the relief generator. If an opaque material is chosen for producing the relief generator, it should be mounted at the rear of the display screen. With the advent of flexible displays, for example based on organic LED's or electronic ink, it becomes possible to generate relief at the rear of the screen which is still perceptible at the front. If, for example, the relief is generated by electromechanical means, e.g. by means of magnets and coils, it is unlikely that a transparent implementation is feasible. In such cases, the relief generator can be located at the rear of the display screen.

In an embodiment of the display system according to the invention the relief generator is capable of automatically determining a relief for predetermined graphical objects, such as buttons and sliders. The invention is particularly useful for enhancing the graphical representation with tactile guidance. For example, a graphical representation of a button can be enhanced by a protrusion (or a depression) behind or in front of that representation, so the user can actually feel the button, as distinct from its environment. In general this enhancement can be generated by the software application generating the graphical representation. However, the present embodiment of the display system according to the invention is capable of recognizing predetermined graphical user interface (GUI) objects, such as buttons and sliders, and generate the appropriate relief for these objects. Such an architecture is easily integrated with a separate GUI component, e.g. a X-Windows terminal. Nowadays, graphical operating systems nearly always have a separate layer with predefined graphical objects, whose appearance may be adapted to some extent by the application but whose behavior is predefined. The definition of such GUI objects may be extended with a definition of the appropriate tactile guidance.

In an embodiment of the display system according to the invention the relief generator is arranged to dynamically generate changes in the relief in response to user actuations, so as to provide tactile feedback. Note the difference between tactile guidance and tactile feedback. Tactile guidance is static (with respect to a present graphical representation) whereas tactile feedback is dynamic, responding to a user actuation. For example, a physical push button initially resists a user pressing it. When the exerted force exceeds a threshold, the button is actuated and the user feels a 'snap' action confirming that the button is actually pressed. In a GUI this snap action is often simulated by changing the graphical representation and sometimes by a clicking or beeping sound. With the present embodiment this can be further enhanced with real tactile feedback. For example, when the user presses a graphical button with sufficient force, an initial protrusion may be suddenly removed or even converted into a depression, giving a clear indication to the user that the button is pressed. In an advanced embodiment, the user is even able to 'push' a slider button along a slider control. To this end, the display system may detect that a user's finger presses both the slider button and part of its environment, and responds by shifting the protrusion 'away' from the finger, opposite the place where the user's finger touches the environment of the slider button. The user can then just retract his finger, or continue sliding the button by following the movement of the protrusion.

The invention is particularly suitable for data processing devices which utilize touch input for user interaction with the system, e.g. PDA, cell phones etc.

### BRIEF DESCRIPTION OF THE DRAWINGS

These and other aspects of the invention are apparent from and will be elucidated, by way of a non-limitative example, with reference to the embodiment(s) described hereinafter. In the drawings,
Figure 1 shows a diagram of a personal digital assistant as an embodiment of the data processing system according to the invention,
Figure 2 schematically shows a cross-section of a display screen comprising a relief generator according to the invention,
Figure 3 schematically shows a cross-section of an alternative display screen comprising a relief generator according to the invention,
Figure 4 schematically shows a display screen comprising a relief generator with tactile feedback capability,
Figure 5 schematically shows another display screen comprising a relief generator with tactile feedback capability.

### DESCRIPTION OF EMBODIMENTS

For consistency and ease of understanding, the same reference numerals are used in different Figures for items serving the same or a similar function.

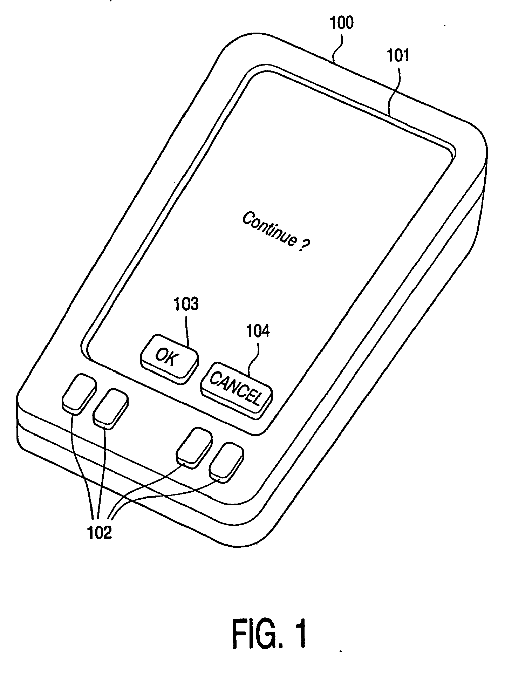

Figure 1 shows a diagram of a personal digital assistant 100 as an embodiment of the data processing system according to the invention. The PDA 100 comprises a display screen 101, which is a touch-sensitive liquid crystal display (LCD), capable of displaying graphical representations and sensing touch input by the user. The PDA100 further comprises hardware push-buttons, e.g. for activating regularly used applications such as an agenda, a calculator, an address list and a notepad. The graphical representation as currently displayed on the display screen 101 comprises a message "Continue?" and two soft-buttons 103 and 104, respectively for continuing or canceling the current operation. The two buttons 103 and 104 protrude from the display screen 101, caused by relief generated by a relief generator at locations which coincide with the graphical representations of the buttons. As a result, the user need not carefully watch the screen while operating the screen, since he can feel the presence of the buttons while sliding his finger across the screen. This is very convenient in dark conditions or in a multi-tasking setting. Preferably, the buttons are only actuated when the force exerted by the user exceeds a certain threshold, so that the user can first search the buttons with his finger without accidentally actuating one of them.

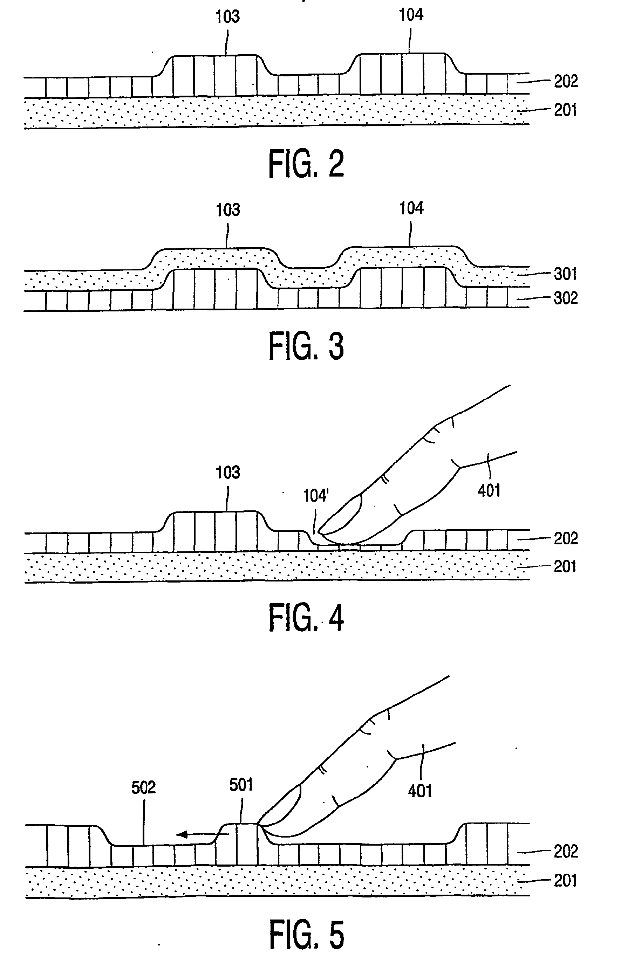

Figure 2 schematically shows a cross-section of a display screen comprising a relief generator according to the invention. The display screen comprises an LCD display 201 which may be of conventional type. On top of it is provided a layer 202 of transparent piezo electrical elements constituting the relief generator. Each element can be addressed separately, so as to generate relief at any desired location. The protrusions corresponding to buttons 103 and 104 are depicted in Figure 2 from side view. The width of each button corresponds to four protruding elements, while the height of each button may, for example, correspond to two protruding elements. In alternative embodiments the elements can be larger or smaller, dependent on the sophistication of the system. In an ideal case, the elements correspond to individual graphical pixels. The graphical representation of the buttons 103 and 104 can be viewed through the transparent layer 202. Due to optical refraction of the layer 202, the graphical representation may be slightly transformed, but this can be turned into an advantage by making the buttons more salient in this way, e.g. through a magnifying effect. The protrusions may be accomplished by activating the relief elements at the corresponding positions so as to cause said protrusions, or complementarily generating a depression at all non-corresponding locations, e.g. by supplying an inverse signal to the non-corresponding elements. Also a combination of the two approaches may be used.

Figure 3 schematically shows a cross-section of an alternative display screen comprising a relief generator according to the invention. In this alternative embodiment the relief generator 302 is located at the rear of the display screen 301. The display screen 301 has to be a flexible display, capable of bending around the relief generated by the relief generator 302. The relief generator 302 need not be transparent in this case, so it may for example be built from opaque piezo-electrical material or electromechanical parts driving pins against the rear of the display screen 301 to cause the relief.

Figure 4 schematically shows a display screen comprising a relief generator with tactile feedback capability. It depicts the same situation as Figure 2, but now button 104 is depressed by the user's finger 401. Initially, when the user's finger 401 just lightly touches the button 104, the protrusion is maintained. Only when the force exerted by the user's finger exceeds a certain threshold, the protrusion is cancelled or even converted into a depression, giving a 'snap' feeling indicating to the user that the button is actually pressed. For that purpose the relief generator and the interactive application generating the graphical button should be able to communicate this exceeding of the threshold. The application will only cancel the current operation if the button 104 is actually actuated, i.e. when the exerted force exceeds the predetermined threshold. As described above, the piezo electrical layer can be additionally used as a touch sensitive layer. The initial touching of the user's finger 401 causes a depression of the button 104 which in turn causes a small voltage generated by the piezo electrical material. This voltage is opposite to the voltage applied to the button for generating the protrusion. This latter voltage may be maintained or even increased temporarily for generating a resistance, and suddenly lowered, removed or even inverted when the exerted force exceeds the predetermined threshold. This causes a snap action which resembles the feeling of operating a hardware push-button.

In an advanced embodiment a toggle push button (typically an on/off button) may be simulated by controlling a graphical button, after release by the user's finger, to remain in a lower position (representing an 'on' state) or return to an upper position (representing an 'off' state). The lower position may be lower than or equal to a neutral level, while the upper position may be equal to or higher than the neutral level. These different levels may be accomplished by supplying various voltage levels, either all positive, or both positive and negative voltages. For example, an intermediate positive voltage may be used for generating the neutral level, while a zero voltage may be used for generating a depression. Alternatively, the neutral level may correspond to a zero voltage, while a depression corresponds to a negative voltage.

Figure 5 schematically shows another display screen comprising a relief generator with tactile feedback capability. It depicts a user's finger 401 pushing a slider button 501 along a slider control 502. The slider control 502 is represented by an oblong depressed area, wherein the slider button 501 is represented by a protrusion at the appropriate position along the slider control. Just pressing the slider button 501 in a direction perpendicular to the display screen 201 does not have any effect, at least not a change of the variable to be adjusted with the slider control. It could, for example, be interpreted as a confirmation of an adjustment. The actual adjustment is achieved by detecting a touch of the user's finger 401 on both the slider button 501 and the slider control 502. This is interpreted by the system as the desire to push the slider button 501 in the opposite direction, i.e. to the left in Figure 5. The relief generator 202 reacts by relocating the protrusion corresponding to the slider button 501 to the left by a predetermined distance, which could be further dependent on the force exerted. Subsequently, the user may remove his finger to stop adjusting the slider button, or follow the movement of the protrusion by shifting his finger to the left as well. Eventually, if the slider button reaches the end of the slider control, the relief generator 202 may communicate this to the user by not moving the protrusion any further, so maintaining the protrusion at the current position. The user can move the slider button 501 back again by placing his finger 401 on the other side of the button 501 and simultaneously at the end of the slider control 502 or the 'neutral' area beyond it. In an advanced embodiment the relief generator 202 is capable of detecting a component of the force exerted by the user which is not perpendicular to the display screen 201. In that case there is no need for the user to simultaneously touch the slider button 501 and part of the slider control 502, so the user can push the slider button 501 by just pressing against it in a direction not perpendicular to the display screen 201.

In summary, the invention relates to a display system which comprises a display screen for displaying a graphical representation. The surface of the display screen has relief in order to provide tactile and/or visual guidance to the user. The display system according to the invention comprises a relief generator for dynamically generating the relief on the display screen. It is thus achieved that the relief can be changed dynamically in accordance with the graphical output of the current application.

Although the invention has been described with reference to particular illustrative embodiments, variants and modifications are possible within the scope of the inventive concept. Thus, for example, the relief generator may be applied in a device without any support for touch control, so just for visual and/or tactile guidance. Alternatively, a separate touch sensitive layer may be applied, dedicated to the touch detection function, while the relief generator is dedicated to the generation of relief.

The word 'comprising' does not exclude the presence of elements or steps other than those listed in a claim. In the claims, any reference signs placed between parentheses shall not be construed as limiting the claim. The invention can be implemented by means of hardware comprising several distinct elements, and by means of a suitably programmed computer. In the device claim enumerating several means, several of these means can be embodied by one and the same item of hardware.

## Claims

1. A display system (100) comprising a display screen (101) having a layer (201, 301) for graphically displaying there at a graphical representation, **characterized in that** the display system further comprises a relief generator (202, 302) for dynamically generating a relief on top of or under the layer of the display screen for additionally providing tactile and/or visual information.

2. A display system as claimed in claim 1, wherein the relief generator (202, 302) comprises piezo electrical material to provide said relief in response to electrical signals.

3. A display system as claimed in claim 1 or 2, further arranged to detect user actuations from electrical signals received from the relief generator (202, 302).

4. A display system as claimed in any one of claims 1 or 3, wherein the relief generator (202, 302) is arranged to produce protrusions (103) or depressions (104') at selected locations of the display screen.

5. A display system as claimed in any one of claims 1 to 4, wherein the relief generator (202, 302) comprises individually addressable relief elements (202) each of which is arranged to cause a displacement in a direction substantially perpendicular to the display screen.

6. A display system as claimed in any one of claims 1 to 5, wherein the relief generator comprises transparent material (202) and is located at the front of the display screen (101).

7. A display system as claimed in any one of claims 1 to 5, wherein the relief generator (302) is located at the rear of the display screen (101), the display screen (301) being a flexible display capable of following the relief provided by the relief generator.

8. A display system as claimed in any one of claims 1 to 7, wherein the relief generator (202, 302) is capable of automatically determining a relief for predetermined graphical objects, such as buttons and sliders.

9. A display system as claimed in any one of claims 1 to 8, wherein the relief generator is arranged to dynamically generate changes (104') in the relief in response to user actuations, so as to provide tactile feedback.

10. A data processing system (100) comprising a display system as claimed in any one of claims 1 to 9.

## Patentansprüche

1. Anzeigensystem (100), umfassend einen Anzeigenschirm (101) mit einer Schicht (201, 301) zum grafischen Anzeigen einer grafischen Repräsentation darauf, **dadurch gekennzeichnet, dass** das Anzeigensystem weiterhin einen Reliefgeber (202, 302) zum dynamischen Erzeugen eines Reliefs auf oder unter der Schicht des Anzeigenschirms zum zusätzlichen Bereitstellen taktiler und/oder visueller Informationen umfasst.

2. Anzeigensystem nach Anspruch 1, wobei der Reliefgeber (202, 302) piezoelektrisches Material umfasst, um das Relief als Reaktion auf elektrische Signale bereitzustellen.

3. Anzeigensystem nach Anspruch 1 oder 2, weiterhin angeordnet, um Benutzerbetätigungen aus elektrischen Signalen zu erfassen, welche von dem Reliefgeber (202, 302) empfangen werden.

4. Anzeigensystem nach einem der Ansprüche 1 oder 3, wobei der Reliefgeber (202, 302) eingerichtet ist, um Vorsprünge (103) oder Vertiefungen (104') an ausgewählten Orten des Anzeigenschirms herzustellen.

5. Anzeigensystem nach einem der Ansprüche 1 bis 4, wobei der Reliefgeber (202, 302) individuell adressierbare Reliefelemente (202) umfasst, von welchen jedes eingerichtet ist, um eine Verlagerung in eine Richtung im Wesentlichen senkrecht zum Anzeigenschirm zu bewirken.

6. Anzeigensystem nach einem der Ansprüche 1 bis 5, wobei der Reliefgeber transparentes Material (202) umfasst und vor dem Anzeigenschirm (101) lokalisiert ist.

7. Anzeigensystem nach einem der Ansprüche 1 bis 5, wobei der Reliefgeber (302) hinter dem Anzeigenschirm (101) angeordnet ist, wobei der Anzeigenschirm (301) eine flexible Anzeige ist, welche in der Lage ist, dem Relief zu folgen, welches durch den Reliefgeber bereitgestellt wird.

8. Anzeigensystem nach einem der Ansprüche 1 bis 7, wobei der Reliefgeber (202, 302) in der Lage ist, automatisch ein Relief für vorbestimmte grafische Objekte zu bestimmen, wie beispielsweise für Tasten und Schieber.

9. Anzeigensystem nach einem der Ansprüche 1 bis 8, wobei der Reliefgeber eingerichtet ist, um dynamische Veränderungen (104') an dem Relief als Reaktion auf Benutzerbetätigungen zu erzeugen, um so eine taktile Rückkopplung bereitzustellen.

10. Datenverarbeitungssystem (100), umfassend ein Anzeigensystem nach einem der Ansprüche 1 bis 9.

## Revendications

1. Système d'affichage (100) comprenant un écran d'affichage (101) présentant une couche (201, 301) destinée à afficher de manière graphique sur celle-ci une représentation graphique, **caractérisé en ce que** le système d'affichage comprend en outre un générateur de relief (202, 302) destiné à générer de manière dynamique un relief au-dessus ou en dessous de la couche de l'écran d'affichage, fournissant en outre des informations tactiles et/ou visuelles.

2. Système d'affichage suivant la revendication 1, dans lequel le générateur de relief (202, 302) comprend un matériau piézoélectrique afin de fournir ledit relief en réaction à des signaux électriques.

3. Système d'affichage suivant la revendication 1 ou 2, agencé en outre de manière à détecter des actionnements d'utilisateur à partir de signaux électriques reçus du générateur de relief (202, 302).

4. Système d'affichage suivant l'une quelconque des revendications 1 à 3, dans lequel le générateur de relief (202, 302) est agencé de manière à produire des protubérances (103) ou des creux (104') en des endroits sélectionnés de l'écran d'affichage.

5. Système d'affichage suivant l'une quelconque des revendications 1 à 4, dans lequel le générateur de relief (202, 302) comprend des éléments de relief pouvant être adressés de manière individuelle (202), chacun d'entre eux étant agencé de manière à provoquer un déplacement dans une direction pratiquement perpendiculaire à l'écran d'affichage.

6. Système d'affichage suivant l'une quelconque des revendications 1 à 5, dans lequel le générateur de relief comprend un matériau transparent (202) et se trouve sur le devant de l'écran d'affichage (101).

7. Système d'affichage suivant l'une quelconque des revendications 1 à 5, dans lequel le générateur de relief (302) se trouve à l'arrière de l'écran d'affichage (101), l'écran d'affichage (301) étant un affichage flexible en mesure de suivre le relief fourni par le générateur de relief.

8. Système d'affichage suivant l'une quelconque des revendications 1 à 7, dans lequel le générateur de relief (202, 302) est en mesure de déterminer de manière automatique un relief pour des objets graphiques prédéterminés, comme des boutons et des curseurs.

9. Système d'affichage suivant l'une quelconque des revendications 1 à 8, dans lequel le générateur de relief est agencé de manière à générer de manière dynamique des modifications (104') du relief en réaction à des actionnements d'utilisateur, de manière à fournir un retour tactile.

10. Système de traitement de données (100) comprenant un système d'affichage suivant l'une quelconque des revendications 1 à 9.
